# FASCICULE DE BREVET EUROPEEN

(11) **EP 3 342 708 B1**
(45) Date de publication et mention de la délivrance du brevet: **26.05.2021**
(21) Numéro de dépôt: 17208793.4
(22) Date de dépôt: 20.12.2017
(51) Int. Cl.: B64D 7/08, B64D 1/12

(54) **DISPOSITIF DE LARGAGE D'UNE CHARGE ACCROCHEE SOUS UN AERONEF COMPRENANT DEUX ENSEMBLES D'EMBIELLAGE MONTES EN PARALLELE**
VORRICHTUNG ZUM ABWURF EINES UNTER EINEM FLUGZEUG AUFGEHÄNGTEN LASTES, DIE ZWEI PARALLEL MONTIERTE STANGENSÄTZE UMFASST
DEVICE FOR RELEASING A LOAD ATTACHED BELOW AN AIRCRAFT COMPRISING TWO CONNECTING ROD ASSEMBLIES MOUNTED IN PARALLEL

(30) Priorité: 29.12.2016 FR 1663502
(43) Date de publication de la demande: 04.07.2018
(73) Titulaire: Alkan, 94460 Valenton (FR)
(72) Inventeur: GUARALDO, Denis, 78140 Vélizy (FR)
(74) Mandataire: Cabinet Netter

(56) Documents cités:
- FR-A1- 2 824 044
- GB-A- 1 156 504
- US-A- 5 029 776
- US-B1- 6 250 195

## Description

La présente invention concerne un dispositif pour l'actionnement d'un pantographe de largage de charge pour aéronef.

Il existe actuellement différents types de dispositifs pour larguer une charge accrochée sous un aéronef tel qu'un avion de chasse ou un hélicoptère de combat. En général ceux-ci comprennent principalement des moyens d'attache de la charge sous l'aéronef, par exemple sous la forme de rotules (appelées également tulipes) de type connu, un système extensible de support de charge en forme de pantographe, également de type connu, et au moins un vérin de déclenchement du pantographe. Ces systèmes permettent principalement d'installer une charge, de la maintenir sous l'aéronef sans qu'elle ne se détache de manière imprévue et de l'éjecter en vol.

Dans le cadre du développement d'un nouveau type d'aéronef, il est envisagé d'éjecter des charges à partir d'une soute. Cette nouvelle configuration modifie les conditions d'éjection en introduisant des perturbations aérodynamiques supplémentaires par rapport aux éjections avec une charge qui est à l'extérieur de l'aéronef. En réponse à ce nouvel environnement, il est envisagé de guider la charge pendant la phase d'éjection. Les solutions proposées sont basées sur un guidage par pantographe de type double Y.

Il existe plusieurs systèmes d'architecture de pantographe qui permettent de guider la charge tout en réalisant la poussée d'éjection. Le brevet FR 2 824 044 décrit un tel pantographe, qui est basé sur une architecture double Y, actionné par un actionneur à déplacement linéaire. Un autre dispositif de largage d'une charge accrochée sous un aéronef est connu du document GB 1 156 504 A.

Comme indiqué précédemment, une des problématiques de l'éjection à partir de la soute d'un aéronef réside dans le risque d'interférence de la charge à éjecter avec un des bords de la soute. Ce risque est accru avec les turbulences aérodynamiques générées par une soute.

Une des solutions pour minimiser ce risque est donc de guider la charge pendant la phase d'éjection, ce qui revient à augmenter la rigidité du système d'éjection.

Une problématique spécifique liée au confinement en soute est également la manipulation de la charge quand l'aéronef est au sol, c'est-à-dire l'action de la monter dans la soute et la descendre dans le cas où elle n'a pas été larguée pendant la mission. La contrainte d'espace confiné nécessite des dispositions adaptées et notamment des moyens de manipulation les plus automatiques possibles.

Enfin, il convient également de prendre en compte les besoins fonctionnels connexes suivants (non spécifique à une configuration en soute) :
- Ravalage du système d'éjection après tir ;
- Maintien et verrouillage / déverrouillage du système de déclenchement et d'éjection à la structure avion.

Cependant, dans le brevet FR 2 824 044, il n'est pas expliqué comment la charge est manipulée au sol, ni comment elle est maintenue pendant le vol.

Un but de la présente invention est donc de résoudre les problèmes cités précédemment et de proposer une solution simple à mettre en œuvre et fiable dans de nombreuses configurations.

Ainsi, la présente invention a pour objet un dispositif de largage d'une charge accrochée sous un aéronef, tel qu'un avion de chasse ou un hélicoptère de combat, comprenant au moins :
- un système extensible de largage de la charge en forme de pantographe pouvant prendre une première position repliée de maintien de la charge, par exemple dans une soute de l'aéronef, et une seconde position déployée d'installation de la charge au sol ou de largage de celle-ci en vol par éloignement de cette dernière de l'aéronef par poussée verticale dirigée vers le bas, ledit pantographe de largage comportant au moins deux paires de bielles articulées reliées entre elles par l'intermédiaire de pivots fixes et mobiles formant un ensemble d'embiellage,
- un vérin de déclenchement du pantographe muni d'une tige de vérin à laquelle sont reliés deux pivots supérieurs mobiles dudit pantographe de largage,
caractérisé en ce qu'il comprend en outre un berceau intermédiaire de support de la charge et en ce que le pantographe de largage comprend deux ensembles d'embiellage identiques montés en parallèle le long du berceau et fonctionnant en parfaite synchronisation pour le passage d'une position à l'autre.

De plus, le dispositif conforme à la présente invention comprend les caractéristiques suivantes :
- les deux ensembles d'embiellage sont disposés de part et d'autre d'un plan de symétrie longitudinale du berceau ;
- le berceau est divisé transversalement en deux parties sur chacune desquelles est fixé un ensemble d'embiellage ; et
- le dispositif comprend en outre un piston secondaire lié indirectement au vérin de déclenchement et comportant une tige de piston de sorte que, dans une position sortie de la tige du vérin de déclenchement dans laquelle le pantographe de largage est déployé, la tige du piston secondaire est sortie.

Selon des modes de réalisation préférées, le dispositif conforme à la présente invention comprend l'une au moins des caractéristiques suivantes:
- le vérin de déclenchement est lié aux deux pivots mobiles supérieurs de chaque ensemble d'embiellage par l'intermédiaire d'au moins un, et de préférence deux, charriot(s) coulissant(s) longitudinalement le long d'une structure longitudinal rigide fixée à l'aéronef ;
- le charriot mobile comporte une première butée contre laquelle peut prendre appui une seconde butée solidaire de la tige du piston secondaire de sorte que, pour faire passer le pantographe de largage de la position déployée à la position repliée, la seconde butée du piston secondaire repousse la première butée du charriot mobile en faisant rentrer simultanément la tige dudit piston secondaire et la tige dudit vérin de déclenchement ;
- le dispositif comporte en outre des galets mobiles liés aux pivots mobiles de chaque ensemble d'embiellage du pantographe de largage, lesdits galets comportant des paliers et circulant sur des rails de guidage solidaires de la structure rigide de l'aéronef ;
- le piston secondaire est de type à double effet, par exemple hydraulique ;
- le vérin de déclenchement est de type pneumatique, par exemple pyrotechnique ;
- le vérin de déclenchement comporte au moins deux impulseurs pyrotechniques entraînant le déplacement linéaire des charriots coulissants, lesdits impulseurs étant chacun relié à un connecteur électrique permettant leur déclenchement non simultané avec un décalage temporel entre chaque déclenchement ;
- les impulseurs sont déclenchés l'un après l'autre avec un laps de temps compris entre 20 et 100 millisecondes.
- chaque ensemble d'embiellage comporte une bielle de poussée et une bielle de renvoi, la bielle de renvoi étant disposée intérieurement à la bielle de poussée ; et
- chaque ensemble d'embiellage comporte :
   * des pivots supérieurs mobiles, des pivots intermédiaires mobiles de liaison des bielles, et des pivots inférieurs mobiles qui sont tous disposés dans un premier plan s'étendant le long d'une bielle de poussée, et
   * des pivots supérieurs fixes et des pivots intermédiaires mobiles, une partie extérieure des pivots supérieurs fixes et une partie intérieure des pivots intermédiaires mobiles étant disposées dans un second plan parallèle au premier plan et s'étendant le long de la bielle de renvoi.

L'invention se rapporte également à un aéronef tel qu'un avion de chasse ou un hélicoptère de combat, équipé d'un dispositif de largage de charge tel que décrit précédemment.

L'invention va maintenant être décrite plus en détail en référence à des modes de réalisation particuliers donnés à titre d'illustration uniquement et représentés sur les figures annexées dans lesquelles :
- La figure 1 est une vue en coupe schématique d'un dispositif d'accrochage de charge dans une position avant largage de la charge,
- La figure 2 est similaire à la figure 1 mais dans une position de largage de la charge,
- La figure 3 est une vue similaire à la figure 1 mais en position après largage de la charge,
- La figure 4 est une vue de face de la figure 1 ; et
- La figure 5 est une vue de face de la figure 2.

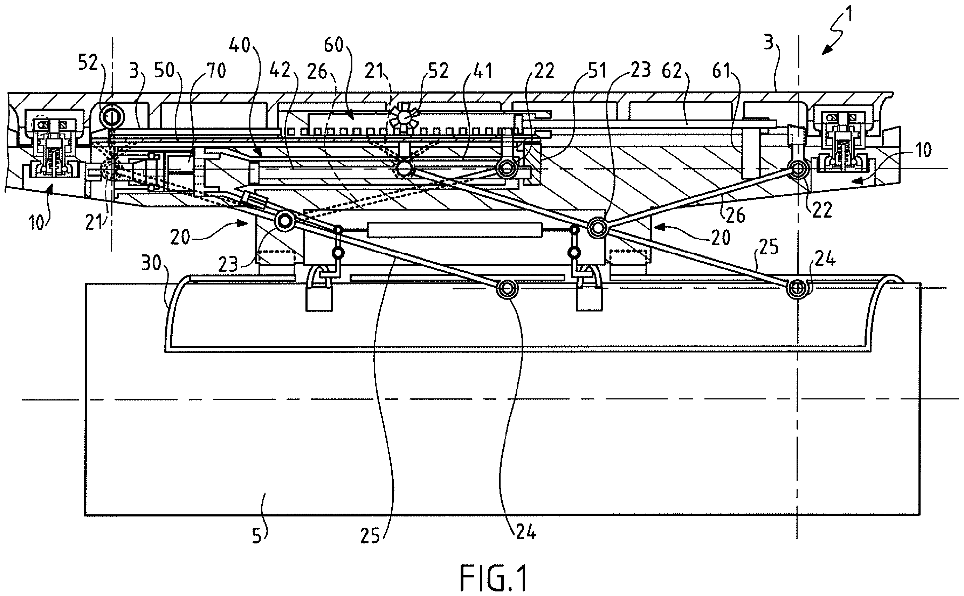

Les figures 1 à 3 représentent un dispositif 1 de largage d'une charge 5, par exemple une bombe, accrochée sous un aéronef 2, tel qu'un avion de chasse ou un hélicoptère de combat.

Ce dispositif 1 comporte principalement des moyens 10 d'attache de la charge 5 sous l'aéronef 2, par exemple sous la forme de rotules (appelées également tulipes) de type connu, un système extensible 20 de support de charge et de largage de celle-ci, se présentant sous la forme d'un pantographe décrit plus en détails ci-après, un berceau intermédiaire 30 de support de la charge 5, un vérin de déclenchement 40 pourvu d'une corps creux 41 renfermant une tige 42, et un piston secondaire 60 pourvu d'une tige 62.

Avantageusement, le vérin de déclenchement 40 est de type pneumatique, par exemple pyrotechnique, et comporte à cet effet des impulseurs pyrotechniques 70, au nombre de deux dans le cas présent, reliés à un connecteur électrique.

Le piston secondaire 60 est quant à lui de type double effet, de préférence hydraulique.

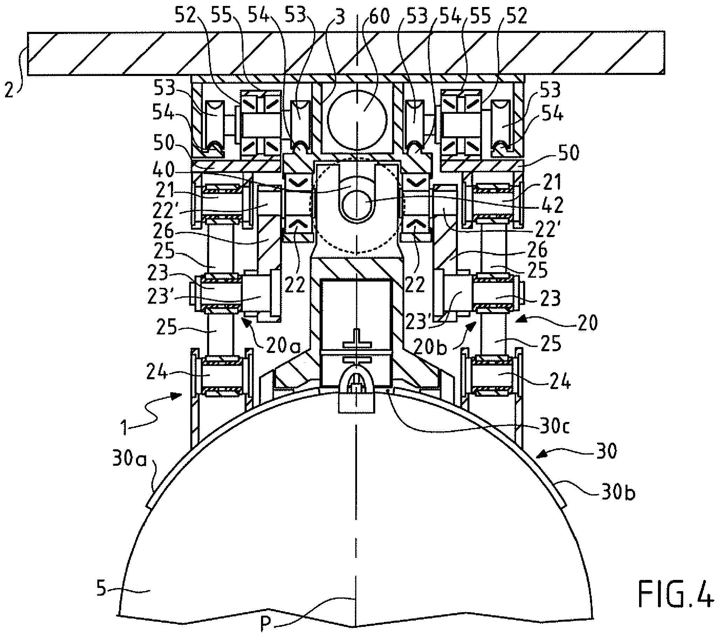

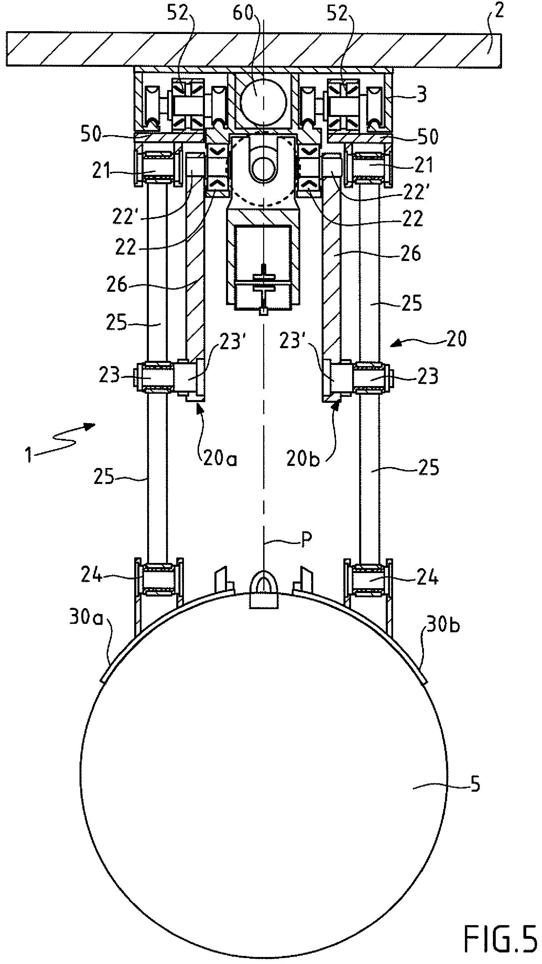

Comme cela est visible sur les figures 4 et 5, le pantographe de largage 20 comporte deux ensembles d'embiellage 20a et 20b identiques disposés de manière parallèle de part et d'autre d'un plan de symétrie longitudinal P du berceau de support 30, ceci afin de mieux répartir la charge. Ces deux ensembles d'embiellage 20a et 20b fonctionnent par ailleurs de manière parfaitement synchronisée, que ce soit pour l'installation au sol de la charge 5 sous l'aéronef, ou pour le largage en vol de ladite charge 5.

Avantageusement, le berceau intermédiaire de support 30 est divisé transversalement en deux parties 30a et 30b séparées par exemple par un espace longitudinal 30c et reliées respectivement aux ensembles d'embiellage 20a et 20b. Ce berceau 30 permet ainsi de reprendre les efforts aérodynamiques transverses appliqués à la charge pendant la phase de poussée, ce qui améliore la rigidité du système dans la direction transversale à la direction d'éjection.

Chacun des ensembles d'embiellage 20a et 20b comporte une paire de pivots supérieurs mobiles 21, une paire de pivots supérieurs fixes 22 liés à l'aéronef 2 par l'intermédiaire d'une structure rigide 3 prévue à cet effet, une paire de pivots intermédiaires mobiles 23, une paire de pivots inférieurs mobiles 24 liés au berceau de support 30, une première paire de bielles articulées de poussée 25 (reliant chacune un pivot supérieur mobile 21, un pivot intermédiaire mobile 23 et un pivot inférieur mobile 24), et une seconde paire de bielles articulées de renvoi 26 reliant un pivot supérieur fixe 22 et un pivot intermédiaire mobile 23.

Les pivots supérieurs mobiles 21, les pivots intermédiaires mobiles de liaison 23, et les pivots inférieurs mobiles 24 de chaque ensemble d'embiellage sont disposés dans un premier plan s'étendant le long de la bielle de poussée 25, tandis qu'une partie extérieure 22' des pivots supérieurs fixes 22 et une partie intérieure 23' des pivots intermédiaires mobiles 23 de chaque ensemble d'embiellage sont disposés dans un second plan parallèle au premier plan et s'étendant le long de la bielle de renvoi 26. On peut également noter, comme cela est visible sur les figures 4 et 5, que pour chaque ensemble d'embiellage 20a ou 20b, la bielle de renvoi 26 est disposée intérieurement à la bielle de poussée 25, c'est-à-dire plus proche du plan de symétrie P.

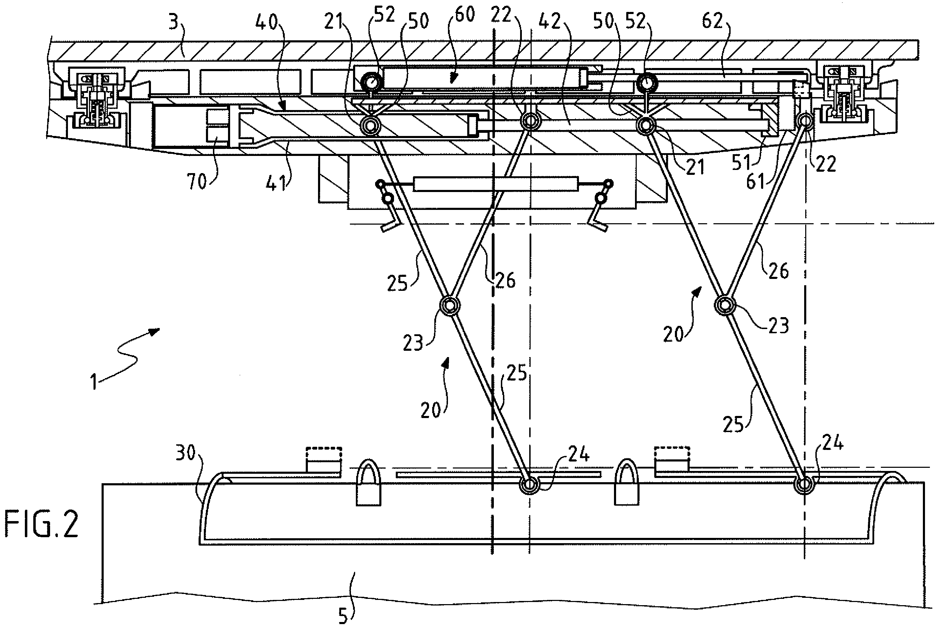

Comme cela est visible sur les figures 1 et 2 puis 3, le vérin de déclenchement 40 est relié au pantographe de largage 20 par l'intermédiaire des deux paires de pivots supérieurs mobiles 21 qui permettent, quand la tige 42 dudit vérin est dans une position sortie, de déployer le pantographe 20.

Plus précisément, les pivots supérieurs mobiles 21 sont portés par un charriot coulissant 50 (un par ensemble d'embiellage 20a ou 20b - voir figures 4 et 5) disposé au-dessus et le long du vérin de largage 40 et comportant une première butée 51 contre laquelle la tige 42 dudit vérin 40 peut prendre appui dans certains cas.

Chaque ensemble embiellage 20a ou 20b comporte également des galets mobiles 52 liés au charriot mobile 50 correspondant (et donc aux pivots supérieurs mobiles 21), lesdits galets 52 comportant chacun une cage 55 et deux paliers symétriques 53 par rapport à ladite cage 55 circulant sur des rails de guidage 54 solidaires de la structure rigide 3 de l'aéronef 2.

Le fonctionnement du dispositif de largage 1 conforme à la présente invention est le suivant.

Dans la position illustrée par la figure 1, la charge 5 est installée et sécurisée sous l'aéronef 2. La tige 42 du vérin de déclenchement 40 est rentrée dans le corps creux 41 tandis que la tige 62 du piston secondaire est sortie, ceci afin de permettre le largage de la charge 5. La charge est bien maintenue en place pour éviter tout largage intempestif.

Dans la seconde position illustrée par la figure 2, une fois que l'ordre de largage a été donné, la sortie extrêmement rapide de la tige 42 du vérin de déclenchement 40 (passage de la figure 1 à la figure 2) provoquée par les déclencheurs pyrotechniques 70 entraîne dans son mouvement le déplacement linéaire des charriots coulissants 50, grâce notamment à la butée 51, aux paliers 53 et aux rails de guidage 55. Ceci a pour effet de déplier les deux ensembles d'embiellage 20a et 20b de manière à éloigner la charge 5 de l'aéronef 2 (figure 5). Plus précisément, chaque charriot 50 entraîne le déplacement linéaire des pivots mobiles 21 qui font alors pivoter les bielles de poussée 25 et de renvoi 26 du pantographe de largage 20 en double Y autour des paires de pivots mobiles respectifs 22, 23 et 24. Le dispositif de largage 1 est alors dans la position illustrée par les figures 2 et 5. La butée 61 du vérin secondaire 60 peut alors servir d'amortisseur pour la butée 51 des charriots 50 afin d'absorber l'inertie du berceau 30 et des ensembles d'embiellages 20a et 20b en fin de course d'éjection.

Avantageusement, chaque impulseur 70 est relié à un connecteur électrique de sorte que le déclenchement desdits impulseurs 70 peut être effectué de manière non simultanée, avec un laps de temps entre chaque déclenchement de quelques millisecondes, typiquement de 20 à 100 millisecondes.

De cette façon, la libération de l'énergie nécessaire au déplacement des charriots 50 ne s'effectue pas d'un coup mais en deux temps de manière à augmenter l'efficacité du système pyrotechnique de déclenchement. Ainsi, la chute de pression qui intervient typiquement très peu de temps après le déclenchement du premier impulseur, et qui est donc source de perte d'énergie, est immédiatement compensée par le déclenchement du second impulseur. Ceci a pour effet de fournir une énergie de poussée plus régulière, sans perte de pression. Enfin, cela évite l'effet de coup de bélier dans le vérin dans le cas où les deux sources d'énergie seraient libérées simultanément.

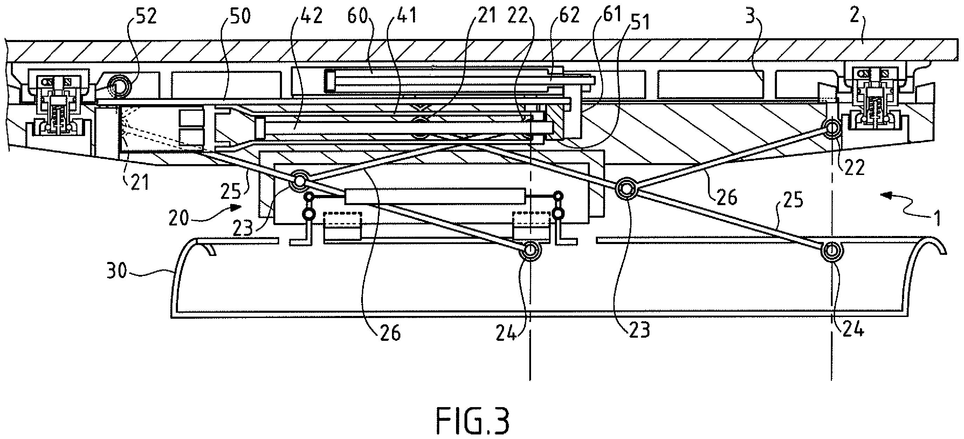

Une fois le largage de la charge 5 effectué, la tige 42 du vérin de déclenchement 40 retourne dans sa position rétractée à l'aide du piston secondaire 60 qui repousse la tige 42 à l'aide de la seconde butée 61 reposant contre la butée 51 du charriot 50, ce qui permet simultanément, par le jeu des différentes bielles et pivots, de remonter le pantographe 20 vers l'avion (le ravalage). Le dispositif de largage 1 est alors dans la position illustrée par la figure 3. Cette opération peut être faite à vide ou avec une nouvelle charge 5 fixée sous le berceau intermédiaire 30 en vue d'un nouveau largage.

Le piston secondaire 60 permet ainsi, à l'aide de sa butée 61, de réaliser des opérations de manipulation du berceau 30 pour le ravaler après une séquence de largage ou lors d'interventions au sol. Dans le cas d'une intervention au sol (maintenance ou installation d'une nouvelle charge notamment), le piston secondaire 60, du fait notamment qu'il soit de type à double effet, permet de descendre ou de monter pantographe 20 avec ou sans la charge.

L'amélioration proposée par la présente invention est donc également d'ajouter un deuxième actionneur 60 de type double effet de manière à pouvoir manipuler la charge au sol et à exécuter le ravalement du pantographe 20 après une éjection en vol. Cette fonctionnalité garantit un ravalement maîtrisé du berceau 30 et élimine le risque de coincement de ce dernier en position basse.

Accessoirement, dans le cas d'un vérin de déclenchement 40 amovible, cela permet, une fois le pantographe 20 déployé vers le bas et le berceau 30 abaissé, d'avoir accès facilement audit vérin afin de le retirer pour le changer.

Cette architecture innovante associe ainsi un actionneur (vérin simple effet : pyrotechnique ou pneumatique) dédié à l'éjection et un actionneur (vérin double effets : hydraulique ou électrique) dédié aux phases de ravalement et de manipulation au sol.

Comme le vérin simple effet 40 est ravalé par le piston double effet 60, on ne consomme pas une partie de l'énergie pneumatique d'éjection qui est limitée (bouteille haute pression à volume fixe, cartouche pyrotechnique génératrice de gaz). Cette disposition permet donc également de gagner en rendement du système d'éjection.

Par ailleurs, la cinématique des deux ensembles d'embiellage 20a et 20b est parfaitement synchronisée tant au largage que lors des opérations de remontée du berceau 30. Cela permet un tir à plat avec une charge 5 guidée pendant toute sa course d'éjection. Le doublement des ensembles d'embiellage et leur symétrie permet également de limiter voire supprimer les risques de blocage du pantographe 20.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, les impulseurs pyrotechniques peuvent être remplacés par un réservoir de gaz sous pression et une valve.

## Revendications

1. Dispositif (1) de largage d'une charge (5) accrochée sous un aéronef (2), tel qu'un avion de chasse ou un hélicoptère de combat, comprenant au moins :
- un système extensible de largage de la charge en forme de pantographe (20) pouvant prendre une première position repliée de maintien de la charge (5), par exemple dans une soute de l'aéronef, et une seconde position déployée d'installation de la charge (5) au sol ou de largage de celle-ci en vol par éloignement de cette dernière de l'aéronef (2) par poussée verticale dirigée vers le bas, ledit pantographe de (20) largage comportant au moins deux paires de bielles articulées (25, 26) reliées entre elles par l'intermédiaire de pivots fixes (22) et mobiles (21, 23, 24) formant un ensemble d'embiellage (20a ; 20b),
- un vérin (40) de déclenchement du pantographe (20) muni d'une tige de vérin (42) à laquelle sont reliés deux pivots supérieurs mobiles (21) dudit pantographe de largage (20),
**caractérisé en ce qu'**il comprend en outre un berceau intermédiaire (30) de support de la charge (5), **en ce que** le pantographe de largage (20) comprend deux ensembles d'embiellage (20a, 20b) identiques montés en parallèle le long du berceau (30) et fonctionnant en parfaite synchronisation pour le passage d'une position à l'autre et **en ce que** les deux ensembles d'embiellage (20a, 20b) sont disposés de part et d'autre d'un plan (P) de symétrie longitudinale du berceau (30), le berceau (30) étant divisé longitudinalement en deux parties (30a, 30b) sur chacune desquelles est fixé un ensemble d'embiellage (20a, 20b), et **en ce qu'**il comprend en outre un piston (60) lié indirectement au vérin de déclenchement (40) et comportant une tige de piston (62) de sorte que, dans une position sortie de la tige (42) du vérin de déclenchement (40) dans laquelle le pantographe de largage (20) est déployé, la tige (62) du piston (60) est sortie.

2. Dispositif (1) selon la revendication 1, **caractérisé en ce que** le vérin de déclenchement (40) est lié aux deux pivots mobiles supérieurs (21) de chaque ensemble d'embiellage (20a, 20b) par l'intermédiaire d'au moins un, et de préférence deux, charriot(s) (50) coulissant(s) longitudinalement le long d'une structure longitudinal rigide (3) fixée à l'aéronef (2).

3. Dispositif (1) selon la revendication 2, **caractérisé en ce que** le charriot mobile (50) comporte une première butée (51) contre laquelle peut prend appui une seconde butée (61) solidaire de la tige (62) du piston (60) de sorte que, pour faire passer le pantographe de largage (20) de la position déployée à la position repliée, la seconde butée (61) du piston (60) repousse la première butée (51) du charriot mobile (50) en faisant rentrer simultanément la tige (62) dudit piston (60) et la tige (42) dudit vérin de déclenchement (40).

4. Dispositif (1) selon la revendication 3, **caractérisé en ce qu'**il comporte en outre des galets mobiles (52) liés aux pivots mobiles (21) de chaque ensemble d'embiellage (20a, 20b) du pantographe de largage (20), lesdits galets (52) comportant des paliers (53) et circulant sur des rails de guidage (54) solidaires de la structure rigide (3) de l'aéronef (2).

5. Dispositif (1) selon l'une quelconque des revendications 1 à 4, **caractérisé en ce que** le piston (60) est de type à double effet, par exemple hydraulique.

6. Dispositif (1) selon l'une quelconque des revendications précédentes, **caractérisé en ce que** le vérin de déclenchement (40) est de type pneumatique, par exemple pyrotechnique.

7. Dispositif (1) selon l'une quelconque des revendications précédentes, **caractérisé en ce que** chaque ensemble d'embiellage (20a, 20b) comporte une bielle de poussée (25) et une bielle de renvoi (26), la bielle de renvoi (26) étant disposée intérieurement à la bielle de poussée (25).

8. Dispositif (1) selon l'une quelconque des revendications précédentes, **caractérisé en ce que** chaque ensemble d'embiellage (20a, 20b) comporte :
- des pivots supérieurs mobiles (21), des pivots intermédiaires mobiles (23) de liaison des bielles (25, 26), et des pivots inférieurs mobiles (24) qui sont tous disposés dans un premier plan s'étendant le long d'une bielle de poussée (25), et
- des pivots supérieurs fixes (22) et des pivots intermédiaires mobiles (23), une partie extérieure (22') des pivots supérieurs fixes (22) et une partie intérieure (23') des pivots intermédiaires mobiles (23) étant disposées dans un second plan parallèle au premier plan et s'étendant le long de la bielle de renvoi (26).

9. Aéronef tel qu'un avion de chasse ou un hélicoptère de combat, équipé d'un dispositif (1) de largage de charge (5) selon l'une quelconque des revendications précédentes.

## Patentansprüche

1. Vorrichtung (1) zum Abwerfen einer Last (5), die unter einem Luftfahrzeug (2), wie etwa einem Jagdflugzeug oder einem Kampfhubschrauber, angehängt ist, mindestens umfassend:
- ein ausschiebbares System zum Abwerfen der Last in Form eines Pantografen (20), der eine erste eingefahrene Stellung zum Halten der Last (5), zum Beispiel in einem Laderaum des Luftfahrzeugs, und eine zweite ausgefahrene Stellung zum Anbringen der Last (5) am Boden oder zum Abwerfen derselben im Flug durch Entfernen der Letzteren vom Luftfahrzeug (2) durch nach unten gerichteten vertikalen Schub einnehmen kann, wobei der Abwurfpantograf (20) mindestens zwei Paare Gelenkstangen (25, 26) umfasst, die mittels fester (22) und beweglicher (21, 23, 24) Zapfen miteinander verbunden sind, die eine Gestängebaugruppe (20a; 20b) bilden,
- einen Zylinder (40) zum Auslösen des Pantografen (20), der mit einer Zylinderstange (42) ausgestattet ist, mit der zwei bewegliche obere Zapfen (21) des Abwurfpantografen (20) verbunden sind,
**dadurch gekennzeichnet, dass** sie weiter eine Zwischenwiege (30) zum Tragen der Last (5) umfasst, dadurch, dass der Abwurfpantograf (20) zwei identische Gestängebaugruppen (20a, 20b) umfasst, die entlang der Wiege (30) parallel angebracht sind und zum Überführen von einer Stellung in die andere in perfekter Synchronisation arbeiten, und dadurch, dass die zwei Gestängebaugruppen (20a, 20b) beiderseits einer Längssymmetrieebene (P) des Bettes (30) angeordnet sind, wobei das Bett (30) in Längsrichtung in zwei Teile (30a, 30b) unterteilt ist, an jedem von denen eine Gestängebaugruppe (20a, 20b) befestigt ist, und dadurch, dass sie weiter einen Kolben (60) umfasst, der indirekt mit dem Auslösezylinder (40) verbunden ist und eine Kolbenstange (62) umfasst, sodass in einer ausgebrachten Stellung der Stange (42) des Auslösezylinders (40), in der der Abwurfpantograf (20) ausgefahren ist, die Stange (62) des Kolbens (60) ausgebracht ist.

2. Vorrichtung (1) nach Anspruch 1, **dadurch gekennzeichnet, dass** der Auslösezylinder (40) mittels mindestens einem, und vorzugsweise zwei in Längsrichtung entlang einer am Luftfahrzeug (2) befestigten starren Längsstruktur (3) verschiebbaren Schlitten (50) mit den zwei oberen beweglichen Zapfen (21) jeder Gestängebaugruppe (20a, 20b) verbunden ist.

3. Vorrichtung (1) nach Anspruch 2, **dadurch gekennzeichnet, dass** der bewegliche Schlitten (50) einen ersten Anschlag (51) umfasst, an dem ein fest mit der Stange (62) des Kolbens (60) verbundener zweiter Anschlag (61) zur Anlage kommen kann, sodass, um den Abwurfpantografen (20) aus der ausgefahrenen Stellung in die eingefahrene Stellung zu überführen, der zweite Anschlag (61) des Kolbens (60) den ersten Anschlag (51) des beweglichen Schlittens (50) zurückschiebt, indem er gleichzeitig die Stange (62) des Kolbens (60) und die Stange (42) des Auslösezylinders (40) einzieht.

4. Vorrichtung (1) nach Anspruch 3, **dadurch gekennzeichnet, dass** sie weiter bewegliche Rollen (52) umfasst, die mit den beweglichen Zapfen (21) jeder Gestängebaugruppe (20a, 20b) des Abwurfpantografen (20) verbunden sind, wobei die Rollen (52) Lager (53) umfassen und auf fest mit der starren Struktur (3) des Luftfahrzeugs (2) verbundenen Führungsschienen (54) laufen.

5. Vorrichtung (1) nach einem der Ansprüche 1 bis 4, **dadurch gekennzeichnet, dass** der Kolben (60) vom Typ mit Doppelwirkung, zum Beispiel hydraulisch, ist.

6. Vorrichtung (1) nach einem der vorstehenden Ansprüche, **dadurch gekennzeichnet, dass** der Auslösezylinder (40) vom pneumatischen, zum Beispiel pyrotechnischen, Typ ist.

7. Vorrichtung (1) nach einem der vorstehenden Ansprüche, **dadurch gekennzeichnet, dass** jede Gestängebaugruppe (20a, 20b) eine Schubstange (25) und eine Rückholstange (26) umfasst, wobei die Rückholstange (26) innerhalb der Schubstange (25) angeordnet ist.

8. Vorrichtung (1) nach einem der vorstehenden Ansprüche, **dadurch gekennzeichnet, dass** jede Gestängebaugruppe (20a, 20b) umfasst:
- bewegliche obere Zapfen (21), bewegliche mittlere Zapfen (23) zur Verbindung der Stangen (25, 26), und bewegliche untere Zapfen (24), die alle in einer ersten Ebene angeordnet sind, welche sich entlang einer Schubstange (25) erstreckt, und
- feste obere Zapfen (22) und bewegliche mittlere Zapfen (23), wobei ein äußerer Teil (22') der festen oberen Zapfen (22) und ein innerer Teil (23') der beweglichen mittleren Zapfen (23) in einer zweiten Ebene angeordnet sind, die zur ersten Ebene parallel ist und sich entlang der Rückholstange (26) erstreckt.

9. Luftfahrzeug, wie etwa ein Jagdflugzeug oder ein Kampfhubschrauber, der mit einer Vorrichtung (1) zum Abwerfen einer Last (5) nach einem der vorstehenden Ansprüche ausgerüstet ist.

## Claims

1. A device (1) for dropping a load (5) attached below an aircraft (2), such as a fighter aircraft or a combat helicopter, comprising at least:
- an expandable system for dropping the load in the form of a pantograph (20) which may take a first stowed position for holding the load (5), for example within a cargo bay of the aircraft, and a second deployed position for installing the load (5) on the ground or for dropping it in flight by moving the latter away from the aircraft (2) through a vertical push directed downwards, said drop pantograph (20) including at least two pairs of articulated connecting rods (25, 26) connected to each other via fixed (22) and movable (21, 23, 24) pivots forming a connecting rod assembly (20a; 20b),
- a cylinder (40) for triggering the pantograph (20) provided with a cylinder rod (42) to which two movable upper pivots (21) of said drop pantograph (20) are connected,
**characterised in that** it further comprises an intermediate cradle (30) for supporting the load (5), **in that** the drop pantograph (20) comprises two identical connecting rod assemblies (20a, 20b) mounted in parallel along the cradle (30) and operating in perfect synchronisation for switching from one position to another and **in that** the two connecting rod assemblies (20a, 20b) are disposed on either side of a plane (P) of longitudinal symmetry of the cradle (30), the cradle (30) being split longitudinally into two portions (30a, 30b) on each of which a connecting rod assembly (20a, 20b) is secured, and **in that** it further comprises a piston (60) indirectly linked to the trigger cylinder (40) and including a piston rod (62) such that, in an extended position of the rod (42) of the trigger cylinder (40) in which the drop pantograph (20) is deployed, the rod (62) of the piston (60) is extended.

2. The device (1) according to claim 1, **characterised in that** the trigger cylinder (40) is linked to the two upper movable pivots (21) of each connecting rod assembly (20a, 20b) via at least one, and preferably two, carriage(s) (50) sliding longitudinally along a rigid longitudinal structure (3) secured to the aircraft (2).

3. The device (1) according to claim 2, **characterised in that** the movable carriage (50) includes a first stop (51) against which a second stop (61) integral with the rod (62) of the piston (60) can bear such that, to make the drop pantograph (20) switch from the deployed position into the stowed position, the second stop (61) of the piston (60) pushes the first stop (51) of the movable carriage (50) back by making the rod (62) of said piston (60) and the rod (42) of said trigger cylinder (40) retract simultaneously.

4. The device (1) according to claim 3, **characterised in that** it further includes movable rollers (52) linked to the movable pivots (21) of each connecting rod assembly (20a, 20b) of the drop pantograph (20), said rollers (52) including bearings (53) and moving on guide rails (54) integral with the rigid structure (3) of the aircraft (2).

5. The device (1) according to any one of claims 1 to 4, **characterised in that** the piston (60) is of the double-acting type, for example hydraulic.

6. The device (1) according to any one of the preceding claims, **characterised in that** the trigger cylinder (40) is of the pneumatic type, for example pyrotechnic.

7. The device (1) according to any one of the preceding claims, **characterised in that** each connecting rod assembly (20a, 20b) includes a push connecting rod (25) and a crank (26), the crank (26) being disposed internally to the push connecting rod (25).

8. The device (1) according to any one of the preceding claims, **characterised in that** each connecting rod assembly (20a, 20b) includes:
- movable upper pivots (21), movable intermediate pivots (23) for linking the connecting rods (25, 26), and movable lower pivots (24) all of which are disposed in a first plane extending along a push connecting rod (25), and
- fixed upper pivots (22) and movable intermediate pivots (23), an external portion (22') of the fixed upper pivots (22) and an internal portion (23') of the movable intermediate pivots (23) being disposed in a second plane parallel to the first plane and extending along the crank (26).

9. An aircraft such as a fighter aircraft or a combat helicopter, equipped with a device (1) for dropping a load (5) according to any one of the preceding claims.
